# EUROPEAN PATENT SPECIFICATION

(11) **EP 1 095 075 B1**
(45) Date of publication and mention of the grant of the patent: **02.01.2008**
(21) Application number: 99912186.6
(22) Date of filing: 26.03.1999
(51) Int. Cl.: C08F 255/00, C08F 285/00, C08L 23/00, C08L 51/06, C08L 77/00

(54) **COMPATIBILIZED COMPOSITION OF POLYOLEFIN AND POLYAMIDE**
KOMPATIBILISIERTE ZUSAMMENSETZUNG AUS POLYOLEFIN UND POLYAMID
COMPOSITION COMPATIBILISEE DE POLYOLEFINE ET POLYAMIDE

(30) Priority: 27.03.1998 NO 981409
(43) Date of publication of application: 02.05.2001
(73) Proprietor: Borealis Technology Oy, 06101 Porvoo (FI)
(72) Inventor: BORVE, Kjetil, Larsen, N-3280 Tjodalyng (NO); HU, Guo-Hua, F-67200 Strasbourg (FR); CARTIER, Hervé, F-92300 Levallois Perre (FR)
(74) Representative: Kador & Partner
(86) International application number: PCT/NO1999/000103
(87) International publication number: WO 1999/050323

(56) References cited:
- WO-A1-96/06872
- US-A- 5 342 886
- US-A- 5 554 677
- US-A- 5 605 961

## Description

### Field of invention

The present invention relates to a compatibilized polymer blend from a polyamide and a polyolefin, and a method for obtaining said composition. More particularly, the present invention relates to compatilized blends of polypropylene and polyamide obtained by grafting onto polypropylene chains reactive isocyanate groups from which caprolactam monomers are polymerised to obtain grafted polyamide chains.

### Background art

Physical blends of different polymer resins are well known in the art. Several attempts have been made to obtain materials endowed with improved properties by blending polypropylenes and polyamides. However, these polymer resins are incompatible and a compatibilizing agent is requested. Thus, US Patent 5,342,886 discloses a polymer alloy comprising a polyamide, a polyolefin and a compatibilizing amount of a graft copolymer. The latter is prepared by introducing onto a polyolefin backbone a reactive group, most preferably maleic anhydride (MAH). Subsequently, a separately prepared monoamino-substituted polyamide oligomer is reacted with the MAH groups to obtain a compatibilizing graft copolymer. US 5,605,961 discloses a thermoplastic composition comprising a polypropylene, a polyurethane and a compatibilizing agent consisting of a polypropylene grafted with 0.5 % MAH reacted with a polyamide (PA6,36) resin.

An alternative route to blending is the polymerisation of a monomer in the presence of an already prepared polymer made from a different monomer. However, unless both the newly prepared and existing polymers are miscible, compatibilization will be needed to avoid phase separations in the blend.

Compatibilization functions by improving the morphology and interfacial properties within a blend. The compatibilizing agent may be an interfacial agent, an emulsifier or a specific agent, such as a graft or block copolymer added separately or prepared in situ during the blending process. The compatibilizer will self-locate to the interfaces between the main components of a blend and thus reduce the interfacial tensions. As a result the dispersion of the phases will be improved, and the adhesion between the interfaces enhanced.

A separately prepared compatibilizing agent has the advantage of having a controlled molecular structure. Unfortunately, for many commercially relevant blends this procedure is not applicable. The method of preparing the compatibilizing agent in situ during the blending process, often called reactive blending or reactive extrusion, is cost-effective since the compatibilizer is formed directly at the interfaces within the composition. Moreover, in situ methods eliminate the problems related to dispersing a separately prepared agent into a polymer matrix, followed by its slow diffusion to the interfaces and the possibilities of micelle formations. This makes the in situ method very attractive. On the other hand, since the reaction takes place primarily at the interfaces, it will be difficult to control the actually prepared amount of compatibilizer and its molecular structure.

The in situ procedure above has been applied by Kotlar et al. in WO 96/06872 to obtain compatibilized blends of PP and PBT.

As noted above, an important pair of polymers that might result in attractive polymer blends are PP and PA. Unfortunately, they are immiscible and simply blending them will lead to a material having poor mechanical properties. Moreover, it is virtually impossible to obtain a pure graft or block copolymer of PP and PA. In the art it is known to functionalize a PP with maleic anhydride (MAH) and prepare a graft copolymer through blending because MAH will react readily with the terminal amine group of PA. However, once an anhydride moiety on the PP chain has reacted with a PA chain, the nabouring anhydride moiety may for steric reasons become inaccessible for the next PA molecule. This explains the experienced low amount of copolymer formation of MAH grafted PP with PA (in general less than 5 % by weight).

It has now surprisingly been found that an improved blend may be obtained by grafting onto the PP backbone a reactive group of isocyanate which can function as a starting point for an in situ polymerisation.

### Summary of invention

Thus, the present invention provides a compatibilized polymer composition of polyolefin and polyamide, comprising a grafted copolymer consisting of a polyolefin homopolymer grafted with 3-isopropenyl-α,α-dimethyl-benzene isocyanate (TMI) and bonded to the grafted TMI groups poly(ε-caprolactam) chains.

The present invention also provices a method for the preparation of the compatibilized composition defined above, comprising the following steps:
(i) grafting a polyolefin homopolymer with an isocyanate compound,
(ii) polymerising from the grafted isocyanate groups ε-caprolactam monomers in the presence of an activator and a catalyst into poly(ε-caprolactam) chains.

### Best modes for carrying out the invention

The first step in obtaining copolymers of PP having side chains of polycaprolactam involves grafting of reactive isocyanate groups onto the PP backbone. Suitable polypropylene resins comprise all polypropylene homopolymers and copolymers that can be grafted with reactive isocyanate groups. Particularly preferred polypropylenes are polypropylene homopolymers, and copolymers of propylene and ethylene containing up to 30 % of ethylene. These polypropylenes should preferably have a molecular weight of 150,000 to 500,000, and a melt flow index (MFI) of 0.2 to 500 g/10 minutes, preferably 0.2 to 200 g/10 minutes, determined according to the method of ASTM D 1238 using 230°C and 2.16 kg load. The polypropylene resins may be used in the form of granules or as a powder.

To initiate the grafting process any free radical generating peroxide compound known in the art having a suitable decomposition temperature may be used. In particular the following peroxide initiators have been found to give acceptable results: 2,5-bis(tert-butylperoxy)-2,5-dimetylhexane ("DHBP"), 2,5-bis(tert-butylperoxy)-2,5-dimethyl-3-hexyne ("Trigonox 145") and bis(tert-butylperoxyisopropyl)benzene ("Perkadox 14"). A preferred level of peroxide in the polymer blend is in the range between 0.05 to 5 %, more preferably from 0.05 to 2 %, by weight based on the polypropylene resin.

The functionalized reactive isocyanate group to be grafted onto the PP polymer backbone must have sufficient thermal stability to endure normal polyolefin extrusion conditions (exposure to air and humidity at high temperature). Preferred compounds to be grafted onto the PP backbone are isocyanates selected from the group comprising (2-alkyl vinyl benzene) alkyl isocyanates. A preferred compound is 3-isopropenyl-α,α-dimethylbenzene isocyanate (TMI) having the formula:

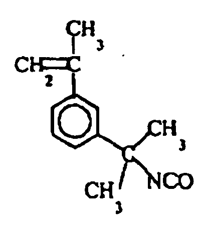

A preferred level of TMI in the polymer blend is in the range from 1 to 10 %, preferably about 3 %, more preferably up to 2%, by weight based on the polypropylene resin.

This functionalizing monomer can be fixed onto the PP chains by free radical grafting. In what follows, PP modified with TMI will be denoted PP-g-TMI. The free radical grafting yield of TMI onto polypropylene is usually low, unless large amounts of a free radical initiator is charged. Moreover, the molecular weight of PP suffers from a significant reduction by β-scission. The mechanisms involved are now well understood and have been documented. Basically there are two solutions to overcome the problem. One is to enhance the free radical reactivity of the double bond of the grafting monomer toward PP tertiary macroradicals, and the other is to improve the reactivity of the macroradicals towards the double bond of the monomer. Addition of electro-donating species such as styrene allows to increase reactivity by a charge transfer mechanism through the forming of an adducted charge transfer complex (CTC). By adding styrene the amount of grafted isocyanate groups increases and simultaneously the PP-chain degradation is reduced. Suitable styrenic compounds are those having the formula: 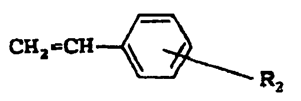 in which R₂ is H, OH, CH₃ or allyl. Preferably R₂ is H, making styrene the preferred styrenic compound. Other compounds than those mentioned above having conjugated unsaturated double bonds, such as quinone, may give similar results. A preferred level of styrene in the polymer blend is in the range between 0.01 to 10 %, more preferably from 0, 5 to 5 %, by weight based on the polypropylene resin.

To obtain the modified polypropylene (PP-g-TMI) the PP as a powder or granules may suitably be premixed with adequate amounts of the free radical initiator, the isocyanate and styrene. Preferably, these components are mixed mechanically at ambient temperature until the liquid isocyanate and styrene have been absorbed completely into the PP granules. The obtained mixture should then be subjected to a more intensive blending at elevated temperatures. During this blending the free radical initiator must decompose and initiate the grafting reactions. It is not necessary to melt the PP granules. However, in a continuous process an extruder may be used and the PP subjected to reactive extrusion.

The obtained degree of grafting can be determined by IR analyses on thin films of the grafted material. The IR spectrograms show a peak at 2255 cm⁻¹ corresponding to the isocyanate group of TMI and a peak at 2772 cm⁻¹ characteristic of PP. The areas under these peaks may be used to calculate the grafting efficiency.

Polyamide 6 (PA6) is obtained through the polymerisation of ε-caprolactam monomers, which are commercially available as a solid having a melting temperature about 71 °C at normal pressure. The polymerisation is performed in the presence of a catalyst. Suitable catalysts may be selected from the group comprising alkali metal or earth alkali metal caprolactam compounds. A preferred catalyst is sodium caprolactamate, commercially available as solid flakes. This catalyst is used in an amount preferably corresponding to 0.5 to 3.5 moles sodium per kg ε-caprolactam, more preferably about 1.4 moles sodium per kg ε-caprolactam.

In addition to the catalyst an activator should also be used. Suitable activators may be selected from the group comprising alkyl diisocynates. A preferred activator is hexamethylene diisocyanate containing blocks of caprolactam. This activator is used in an amount corresponding to 0.5 to 4.0 moles of the contained isocyanate per kg ε-caprolactam. A preferred level is 2.0 moles of the contained isocyanate per kg ε-caprolactam. This activator is commercially available in a powdery form.

In this invention polyamide 6 (PA6) is preferably prepared by an activated anionic polymerisation of ε-caprolactam in the presence of the catalyst and activator indicated above. Despite still some debate over the reaction mechanism, it is believed that the reaction scheme below should represent a reasonable description of the reaction mechanism, when side reactions are disregarded.

### Initiation

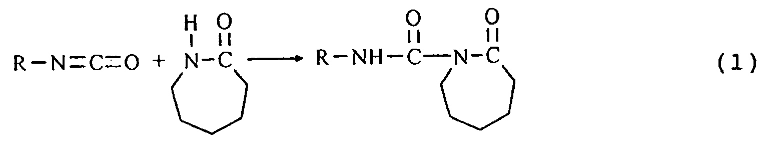

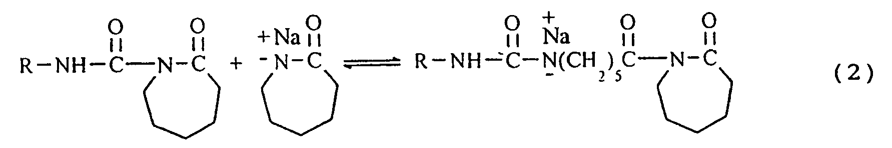

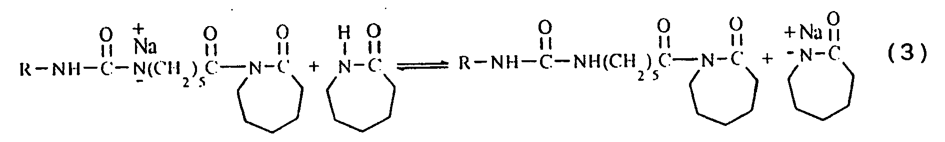

### Propagation

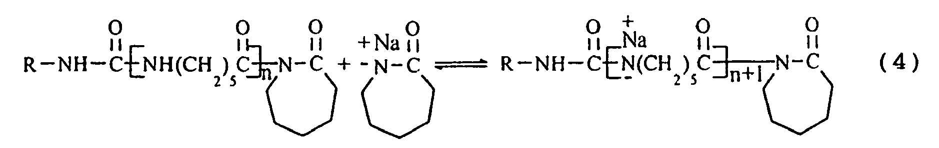

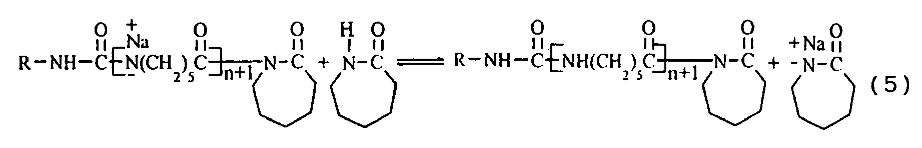

The polymerisation starts with the formation of an acyl caprolactam as a result of the reaction between an isocyanate activator, such as R-N=C=O, and ε-caprolactam (1). This acyl caprolactam then reacts readily with a catalyst such as sodium caprolactamate (Na-caprolactamate) creating a new reactive sodium salt (2). This reaction process then initiates the polymerisation of ε-caprolactam, and the catalyst (Na-caprolactamate) is restored (3). Repetition of Reactions (2) and (3) finally leads to a high molecular weight PA6 (4, 5). As opposed to the hydrolytic polymerisation of PA6 which requires a reaction period of several hours, the activated anionic polymerisation of ε-caprolactam can be accomplished in a few minutes. This time range is comparable to the residence time in a screw extruder.

Any reactive isocyanate group is able to function as a starting site for the polymerisation of ε-caprolactam monomers. This also applies to isocyanate groups grafted onto a polymer backbone. The reaction scheme is similar to that outlined above, including the use of a catalyst and an activator.

According to reactions (1) and (2) above, the isocyanate activator and the ε-caprolactam well form acyl caprolactam which acts as a starting site for the polymerisation of ε-caprolactam. The initiation step involving an isocyanate-bearing polymer (macro-activator precursor) may be illustrated with equation (6):

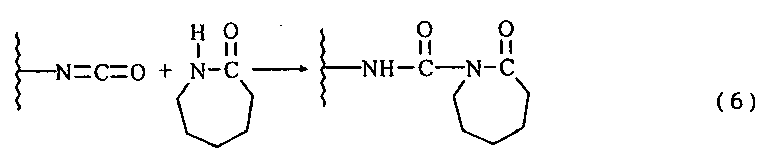

Thus, by grafting isocyanate groups onto a polypropylene homopolymer, these groups will function as starting sites for the homopolymerisation of ε-caprolactam. In this way it is possible to obtain a copolymer having a polypropylene backbone and polyamide chains bonded thereto. In the following this copolymer will be termed grafted copolymer, abbreviated PP-g-PA6. The expected molecular architecture of the copolymer formed can be schematically represented as follows:

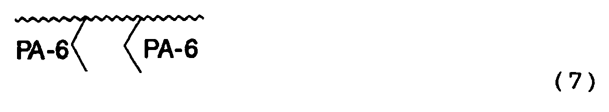

The polymerisation of ε-caprolactam in the presence of the grafted PP-g-TMI can theoretically follow two different reaction paths: the ε-caprolactam may polymerise from the isocyanate groups grafted onto the polypropylene backbone, or ε-caprolactam may polymerise into polyamide chains which then may react with the isocyanate groups grafted onto the polypropylene backbone. Thus, in the ε-caprolactam/PP-g-TMI polymerising system, it could well be that ε-caprolactam is first converted to PA6 which then reacts with PP-g-TMI leading to the formation of the desired copolymer. In order to clarify this possibility, PP-g-TMI was added to a mechanical blend of PP/PA6 and blended in a batch mixer at reaction conditions. The obtained material was investigated in a scanning electron microscope. No morphology changes were observed. This confirms that the PP-g-TMI does not react with end groups of the polyamide molecules. Consequently, in the formation of the grafted copolymer, PP-g-TMI will initiate an anionic polymerisation of ε-caprolactam.

The polymerisation of ε-caprolactam will obviously both result in polyamide chains on the polypropylene backbone, and the formation of separate PA6 as such. The reaction rates of the activated anionic polymerisation, the polycaprolactam chain length of the PP-g-PA6 copolymer and PA6 homopolymer, as well as the morphology, will obviously be influenced by parametres such as the concentration of the TMI groups available, the level of monomeric ε-caprolactam, catalyst and activator, as well as the reaction temperature and other polymerisation conditions. The variation of such parametres will be obvious to an artisan.

The blends of the present invention will comprise the PP-g-PA6 copolymer, a certain amount of PA6 homopolymer and at least a minor amount of non-grafted PP from the grafting step. It will be obvious that the amounts of PA6 homopolymer and ungrafted PP may be chosen freely by selecting the conditions during the preparation. Consequently, it will also be possible to obtain a final composition consisting essentially of PP-g-PA6 copolymer. In principle, this copolymer may be refined to obtain a pure copolymer. PP is soluble in hot xylene and PA6 in formic acid. Therefore, these two components may be solubilized completely, while the PP-g-PA6 copolymer will remain as an insoluble rest. Theoretically, a pure graft copolymer of PP and PA6 can be obtained if PP-g-TMI is used as the only activator. In practice, in this case the conversion of ε-caprolactam to PA6 will be rather low. The reason is that ε-caprolactam and PP-g-TMI are immiscible and a mixtures of them is phase-separated. It is believed that the copolymer is formed at the interphase between PP-g-TMI and ε-caprolactam, and since the nature at the interphase between the grafted polymer and the monomer (a small molecule) is very different from that between two polymers, relatively large amounts of copolymer can still be obtained. This mechanism will be different from using maleic anhydride functionalized PP and PA6 polymer, where the reaction will take place between two polymers.

The composition of the invention can be used with good results as a compatibilizing agent in any blends of polyolefins and polyamides, since it will be miscible with both these types of polymer resins. However, the preferred polyamide is PA6. Preferred polyolefins are polyethylene and polypropylene homopolymer and copolymers, and mixtures thereof. Most preferably the polyolefin is the polypropylene used in the grafting process. In this way it will be possible to obtain directly a final composition blend. It is prefered that the final composition blends contain up to 20 % by weight, based on the total weight of the final polymer composition, of said grafted copolymer.

Articles made from the preferred compositions of the present invention comprising blends of PP, PP-g-PA6 and in situ polymerised PA6 are endowed with properties from both the polypropylene and polyamide 6 components of the composition. Compared to common polypropylene materials the compositions of the invention will have a better oxygen barriere, improved paintability, improved printability, improved dyability, higher impact strength and higher modulus of elasticity, and a higher heat deflection temperature. The composition is particularly suited for conversion to blown and cast film, injection molded articles, and calandered sheets.

In the following examples specific features and preferred embodiments of the invention are explained in more details.

### Examples

### Example 1

### Preparation of modified polypropylene (PP-g-TMI):

A flask equipped with a stirrer was charged with 40 g of granules of a PP homopolymer having a melt flow index (MFI) of 3.5 g/10 min (230 °C, 2.16 kg load) (commercially available from company Borealis AS, Norway, under the trade name "Borealis PP BC 145M") together with 2.5 g of a technically pure grade of 3-isopropenyl-α,α-dimethyl-benzene isocyanate (TMI) and 2.5 g of styrene (both the TMI and styrene are liquids at room temperature), as well as 0.6 g of 2,5-bis(tert-butylperoxy)-2,5-dimetylhexane (DHBP) as a free radical initiator which has a half-life of about 6 seconds at 200 °C. The components were mixed mechanically until the liquids had been absorbed into the PP pellets (after about 15 minutes). The obtained mixture was then transferred to a Rheocord Haake mixer (50 cm³) having two sigma rotors rotating in opposite directions at 64 rev./min (rpm), preheated to 200°C and allowed to react for 10 to 15 minutes. The modified PP granules were then dissolved in boiling xylene and precipitation in acetone at room temperature to obtain a powder of pure, modified PP.

A sample of the obtained PP-g-TMI powder was hot pressed between two stainless steel plates into a film of thickness about 100 pm. This film was then used to determine the degree of TMI grafting by using a Fourier transform infrared (FTIR) method. In the obtained spectra the grafted PP-g-TMI is characterized by the appearance of a peak at 2255 cm⁻¹ corresponding to the isocyanate group of TMI. This peak was used to quantify the yield of TMI grafting. The peak at 2772 cm⁻¹, which is characteristic of PP, was chosen as an internal reference. It was obtained a degree of grafting of 1.8 parts by weight of TMI per hundred parts by weight of PP.

### Example 2 (Comparative Example)

### In situ polymerisation of ε-caprolactam in the presence of PP

The Haake mixer used in Example 1 was preheated to 230 °C and charged with a premixed mixture comprising 50 phr of the PP homopolymer specified in example 1, 50 phr of ε-caprolactam monomer which is a solid at room temperature (melting point about 71 °C at normal pressure), 3.0 phr of a catalyst consisting of Na-caprolactamate containing 1.4 moles sodium per kg ε-caprolactam (commercially available in the form of flakes as catalyst "C10") and 3.0 phr of an activator being hexamethylene diisocyanate having blocks of caprolactam and containing 2.0 moles isocyanate per kg ε-caprolactam (commercially available in a powdery form under the trade name "V5/C-20 Activator"). The ε-caprolactam, catalyst and activator were milled together into a powder and premixed with the PP. This mixture was heated in the mixer at 230 °C and processed with a mixing speed of 64 rpm for 10 minutes, then collected and quenched with liquid nitrogen.

The obtained blend contained no copolymers of PP with PA6 and is in the following termed "PP/PA6 mechanical blend".

Details are given after example 3 below.

### Example 3

### In situ polymerisation and compatibilization of PP/PA6 blends

The general polymerisation procedure of Example 2 was repeated, except that at least a part of the PP homopolymer was replaced with the PP-g-TMI (grafted PP) from Example 1. In all experiments the reaction mixture comprised 50 phr of ε-caprolactam, 3.0 phr of the catalyst and 3.0 phr of the activator, while the amounts of PP homopolymer and the grafted PP-g-TMI were 0 and 50 phr; 20 and 30 phr; 30 and 20 phr by weight, respectively. In the experiment with no PP homopolymer the PP-g-TMI contained 0.4 % of TMI, in the other experiments 1.8 % by weight.

In Examples 2 and 3 during the polymerisations the mixing torques and temperatures within the mixtures were measured. The evolution of torque vs. time is quite similar for all the polymerising systems of examples 2 and 3. The torque first increases very rapidly, reaching a maximum in about 4 to 5 minutes and then decreases drasticly. This indicates that in each polymerising system the polymerisation of ε-caprolactam starts immediately after that the mixing chamber has been charged with the reactants. It is likely that the polymerisation reactions are completed within a reaction time of 5 minutes. The ultimate decrease in torque is believed to imply that after the polymerisation is accomplished, the resulting biphasic PP/PA6 systems undergo a sort of morphological rearrangements to minimize energy. A slightly higher torque is observed for the system containing 20 % of PP and 30 % of PP-g-TMI. In this particular system, more copolymer of PP-g-PA6 is probably formed because of the greater amount of PP-g-TMI present (30 % b.w.) and because the PP-g-TMI contains a relatively high amount of grafted TMI (1.8 phr). The produced copolymer causes a viscosity increase of the system through interfacial and/or morphological modifications.

### Example 4

### In situ polymerisations of ε-caprolactam in the presence of PP and varying amounts of PP-g-TMI

The general procedure of example 3 was repeated, except that in all experiments it was used 30 phr of ε-caprolactam, 3.0 phr of catalyst and 3.0 phr of activator, while the combined amount of PP homopolymer and grafted PP-g-TMI was 70 phr, of which the amount of introduced PP-g-TMI was 0 %, 2 %, 10 %, 20 % and 40 % by weight, respectively. The PP-g-TMI component contained 1.8 phr grafted TMI.

During the polymerisations the mixing torques and temperatures within the mixtures were measured. In all experiments PP starts melting soon after the mixing chamber is charged with the polymerising system. This corresponds to the first peak of the torque histogram. The torque then goes down quickly to almost zero, which is indicative of the formation of an immiscible liquid system of ε-caprolactam and PP. This is then followed by a rapid increase in torque, indicating that the polymerisation of ε-caprolactam has been proceeding rapidly. After passing through a maximum, for the reasons stated above the torque finally decreases in a gradual manner. It is interesting to note that the higher the amount of PP-g-TMI, the greater the maximum and final values of the torque.

### Example 5

Example 4 was repeated, except that the amount of ε-caprolactam comprised 50 phr by weight, and the combined amount of PP and PP-g-TMI comprised 50 phr by weight, of which the amounts of PP-g-TMI used were 0 %, 20 % and 30 % by weight, respectively. The obtained blends, as well as the blends obtained in examples 4, were investigated in a scanning electron microscope (SEM). The PA6 phase could be identified as interspaced globules in a PP matrix. The sizes of the PA6 globules were measured and recorded. The results of the measurements of average diametres of PA6 particles in PP matrix for two polymerisation systems are presented in table 1 below.

From Table 1 it is seen that the average diameters of the PA6 globules depend on the amount of PP-g-TMI in the reaction mixture, and they decrease with an increasing amount of PP-g-TMI.

As a rule, when the diameter of the dispersed globules is about 1 µm or less, the composition is regarded as being suficiently compatibilized.

**TABLE 1**

| vol% PP-g-TMI | Average diameter of PA6 globules (µm) | |
|---|---|---|
| | Polym. system I ¹⁾ | Polym. system II ²⁾ |
| 0 | 14 | 100.0 |
| 2 | 5.8 | 4.4 |
| 10 | 1.5 | - |
| 20 | 1.0 | - |
| 30 | | 1.0 |
| 40 | 0.6 | - |

| | | |
|---|---|---|
| ¹⁾ Polym. system I: 30 % of ε-caprolactam + 70 % of combined PP and PP-g-TMI ²⁾ Polym. system II: 50 % of ε-caprolactam + 50 % of combined PP and PP-g-TMI | | |

### Example 6 (Comparative)

To a 40 g sample of the polymeric blend obtained in Example 2 was added 10 g of the PP-g-TMI (containing 1.8 phr of TMI) obtained in example 1, and the mixing was performed under the same conditions as used in Example 2 for 10 minutes. The morphology of the final polymer blend had not changed from that observed with the mechanical blend of example 2.

### Example 7

The purpose of this example is to verify that the ε-caprolactam polymerises from the TMI group of the PP-g-TMI.

The polymerisation procedure of Example 3 was followed. The weight ratios between PP, PP-g-TMI, ε-caprolactam, catalyst and activator were as specified in Table 2. In all experiments the reaction mixture comprised 50 phr of ε-caprolactam, 3.0 phr of catalyst and 3.0 phr of activator, while the amounts of PP homopolymer and the grafted PP-g-TMI were 50 and 0 phr; 48 and 2 phr; 30 and 20; 0 og 50 phr by weight, respectively. In the experiments the PP-g-TMI contained 1.8 % by weight. The obtained polymer compositions were solublized in xylene and formic acid, and the insoluble part determined.

The copolymer formation was quantified by solvent extraction. PP is soluble in hot xylene and PA6 in formic acid. For a mechanical PP/PA6 blend, it is found that the PP and PA6 phases can be solubilized completely in hot xylene and formic acid, respectively. When the compatibilized PP/PA6 blend was subjected to successive treatments in hot xylene and formic acid, there remained an insoluble rest. This rest was not crosslinked because it had the behaviour of a thermoplastic resin. This rest was a graft copolymer of PP and PA6. The amounts of insolubles in various PP/PA6 (50/50) blends are presented in Table 2. Note that these blends differs only in the ratio between PP and PP-g-TMI. Clearly, a higher amount of PP-g-TMI resulted in a greater insoluble part. When the entire PP phase is composed of PP-g-TMI, the copolymer formed amounted to 16.1 % by weight, based on the weight of the entire final composition.

**TABLE 2**

| Ex. | PP | PP-g-TMI | Insoluble |
|---|---|---|---|
| | phr | phr | wt% |
| 7.1 | 50 | 0 | 0 |
| 7.2 | 48 | 2 | 2.4 |
| 7.3 | 30 | 20 | 12.1 |
| 7.4 | 0 | 50 | 16.1 |

### Example 8

The blends obtained in examples 2 and 3, as well as a PA6 homopolymer, were analyzed with differential scanning calorimetry (DSC) and the heating and cooling curves recorded. Heating and cooling rates were always 10 °C/min. During the heating stage both PP/PA6 mechanical blends and the PP-g-PA6 copolymer display two distinct peaks at 161 °C and 212 °C, which correspond to the melting temperatures of PP and PA6, respectively. Upon cooling, the PP/PA6 mechanical blend has two distinct peaks at 101 °C and 160 °C, respectively. They correspond to the recrystallization temperatures of PP and PA6, respectively. However, the PP-g-PA6 copolymer of example 3 exhibits only one peak at 101 °C. The peak at 160 °C was absent. This is typical of a compatibilized PP/PA6 blend and can be viewed as a proof of PP-g-TMI having acted as an precursor to form the graft copolymer of PP-g-PA6.

### Examples 9 to 15

Blends of PP/PA6 were produced as described in example 3 using various amounts of PP-g-TMI. The PP-g-TMI used contained 0.8 phr TMI. The amounts of PP, PP-g-TMI and ε-caprolactam used are specified in table 3. In examples 14 and 15 no PP-g-TMI were used and consequently these examples fall outside the scope of the invention.

The obtained preblends were extruded in a single screw extruder at 230 °C and a mixing speed of 100 rpm. Specimens from the extruded article were subjected to tensile tests. The test data are presented in table 3.

**TABLE 3**

| Example No. | PP | PP-g-TMI | ε-CL | E-modulus | Elongation at break |
|---|---|---|---|---|---|
| | (wt%) | (wt%) | (wt%) | (MPa) | (%) |
| 9 | 40 | 30 | 30 | 1250 | 180 |
| 10 | 20 | 30 | 50 | 1430 | 23 |
| 11 | 0 | 50 | 50 | 1120 | 265 |
| 12 | 20 | 20 | 60 | 905 | 200 |
| 13 | 10 | 30 | 60 | 890 | 220 |
| 14 comp. | 50 | 0 | 50 | 980 | 13 |
| 15 comp. | 100 | 0 | 0 | 1100 | 200 |

## Claims

1. A compatibilized polymer composition of polyolefin and polyamide, **characterized by** comprising a grafted copolymer consisting of a polyolefin homopolymer grafted with 3-isopropenyl-α,α-dimethyl-benzene isocyanate (TMI) and bonded to the grafted TMI groups poly(ε-caprolactam) chains.

2. A composition according to claim 1, **characterized by** also comprising poly(ε-caprolactam) (PA6) and unreacted polyolefin homopolymer.

3. A composition according to claims 1 or 2, **characterized in that** the polyolefin homopolymer is polypropylene homopolymer.

4. A composition according to claim 3, **characterized by** containing up to 2 % by weight, based on the PP homopolymer, of grafted TMI groups.

5. A composition according to claim 1, **characterized by** containing up to 20 % by weight, based on the total weight of the final polymer composition, of said grafted copolymer.

6. A method for the preparation of a compatibilized composition of polyolefin and polyamide, **characterized by** comprising the following steps:
(i) grafting a polyolefin homopolymer with an isocyanate compound,
(ii) polymerising from the grafted isocyanate groups ε-caprolactam monomers in the presence of an activator and a catalyst into poly(ε-caprolactam) chains.

7. The method of claim 6, **characterized in that** the polyolefin homopolymer is polypropylene homopolymer.

8. The method of claims 6 or 7, **characterized in that** the isocyanate compound is 3-isopropenyl-α,α-dimethyl-benzene isocyanate (TMI).

9. The method of any of claims 6 to 8, **characterized in that** the catalyst is sodium caprolactamate.

10. The method of any of claims 6 to 9, **characterized in that** the activator is hexamethylene diisocyanate containing blocks of caprolactam.

## Patentansprüche

1. Kompatibel gemachte Polymerzusammensetzung aus Polyolefin und Polyamid, **dadurch gekennzeichnet, daß** sie ein Pfropfcopolymer, das aus einem Polyolefin-Homopolymer besteht, das mit 3-Isopropenyl-α,α-dimethyl-benzolisocyanat (TMI) gepfropft ist, und an die TMI-Pfropfgruppen gebundene Poly(ε-caprolactam)-Ketten umfaßt.

2. Zusammensetzung nach Anspruch 1, **dadurch gekennzeichnet, daß** sie auch Poly(ε-caprolactam) (PA6) und unreagiertes Polyolefin-Homopolymer umfaßt.

3. Zusammensetzung nach Anspruch 1 oder 2, **dadurch gekennzeichnet, daß** das Polyolefin-Homopolymer ein Polypropylen-Homopolymer ist.

4. Zusammensetzung nach Anspruch 3, **dadurch gekennzeichnet, daß** sie bis zu 2 Gew.-% TMI-Pfropfgruppen enthält, und zwar auf das PP-Homopolymer bezogen.

5. Zusammensetzung nach Anspruch 1, **dadurch gekennzeichnet, daß** sie bis zu 20 Gew.-% des Pfropfcopolymers umfaßt, und zwar auf das Gesamtgewicht der abschließenden Polymerzusammensetzung bezogen.

6. Verfahren zur Herstellung einer kompatibel gemachten Zusammensetzung aus Polyolefin und Polyamid, **gekennzeichnet durch** die folgenden Schritte:
(i) Pfropfen eines Polyolefin-Homopolymers mit einer Isocyanatverbindung,
(ii) ausgehend von den Isocyanat-Pfropfgruppen Polymerisieren von ε-Caprolactam-Monomeren in Gegenwart eines Aktivators und eines Katalysators in die Poly(ε-caprolactam)-Ketten.

7. Verfahren nach Anspruch 6, **dadurch gekennzeichnet, daß** das Polyolefin-Homopolymer ein Polypropylen-Homopolymer ist.

8. Verfahren nach Anspruch 6 oder 7, **dadurch gekennzeichnet, daß** die Isocyanatverbindung 3-Isopropenyl-α,α-dimethyl-benzolisocyanat (TMI) ist.

9. Verfahren nach einem der Ansprüche 6 bis 8, **dadurch gekennzeichnet, daß** der Katalysator Natriumcaprolactamat ist.

10. Verfahren nach einem der Ansprüche 6 bis 9, **dadurch gekennzeichnet, daß** der Aktivator Hexamethylendiisocyanat ist, das Caprolactamblöcke enthält.

## Revendications

1. Composition de polymère compatibilisée constituée de polyoléfine et de polyamide, **caractérisée en ce qu'**elle comprend un copolymère greffé constitué d'un homopolymère de polyoléfine greffé avec de l'isocyanate de 3-isopropényl-α,α-diméthylbenzène (TMI) et, fixées sur les groupes TMI greffés, des chaînes de poly(ε-caprolactame).

2. Composition selon la revendication 1, **caractérisée en ce qu'**elle comprend aussi du poly(ε-caprolactame) (PA6) et de l'homopolymère de polyoléfine n'ayant pas réagi.

3. Composition selon la revendication 1 ou 2, **caractérisée en ce que** l'homopolymère de polyoléfine est un homopolymère de polypropylène.

4. Composition selon la revendication 3, **caractérisée en ce qu'**elle contient jusqu'à 2% en poids, par rapport à l'homopolymère de PP, de groupes TMI greffés.

5. Composition selon la revendication 1, **caractérisée en ce qu'**elle contient jusqu'à 20% en poids, par rapport au poids total de la composition de polymère finale, dudit copolymère greffé.

6. Procédé de préparation d'une composition compatibilisée de polyoléfine et de polyamide, **caractérisé en ce qu'**il comprend les étapes suivantes :
(i) greffer un homopolymère de polyoléfine avec un composé isocyanate,
(ii) polymériser, à partir des groupes isocyanate greffés, des monomères ε-caprolactame, en présence d'un activateur et d'un catalyseur, en chaînes de poly(ε-caprolactame).

7. Procédé selon la revendication 6, **caractérisé en ce que** l'homopolymère de polyoléfine est un homopolymère de polypropylène.

8. Procédé selon les revendications 6 ou 7, **caractérisé en ce que** le composé isocyanate est l'isocyanate de 3-isopropényl-α,α-diméthylbenzène (TMI).

9. Procédé selon l'une quelconque des revendications 6 à 8, **caractérisé en ce que** le catalyseur est le caprolactamate de sodium.

10. Procédé selon l'une quelconque des revendications 6 à 9, **caractérisé en ce que** l'activateur est le diisocyanate d'hexaméthylène contenant des blocs de caprolactame.
